# EUROPEAN PATENT SPECIFICATION

(11) **EP 2 253 558 B1**
(45) Date of publication and mention of the grant of the patent: **19.12.2012**
(21) Application number: 08871701.2
(22) Date of filing: 20.11.2008
(51) Int. Cl.: B65D 81/26, A23B 4/00

(54) **DRIP-ABSORBENT SHEET**
FLÄCHENGEBILDE ZUM ABSORBIEREN VON TROPFEN
FEUILLE D'ABSORPTION DE GOUTTES

(30) Priority: 01.02.2008 JP 2008022573
(43) Date of publication of application: 24.11.2010
(73) Proprietor: Unicharm Corporation, Ehime 799-0111 (JP)
(72) Inventor: SHIBATA, Akira, Kanonji-shi Kagawa 769-1602 (JP)
(74) Representative: Murgatroyd, Susan Elizabeth
(86) International application number: PCT/JP2008/071078
(87) International publication number: WO 2009/096079

(56) References cited:
- EP-A2- 1 184 075
- JP-A- 4 370 262
- JP-A- 2006 044 802
- US-A- 5 789 076

## Description

### TECHNICAL FIELD

The present invention relates to a drip-absorbent sheet efficiently used to bear meat-product such as fillet of fish food and thereby to absorb drip oozing out from such meat-product.

### RELATED ART

The sheet used to bear meat-product such as fish food and meat thereon and thereby to absorb drip oozing from the meat-product when such meat-product is sold over the counter EP 1184075 discloses such a shut. For example, Japanese Utility Model Registration Gazette No. 3094586 (PATENT DOCUMENT 1) discloses such sheet in the form of a liquid-absorbent mat. The disclosed liquid-absorbent mat comprises a film layer having a plurality of through-bores and a liquid-absorbent layer bonded to the film layer wherein the film layer is formed by laminating a pair of synthetic resin film, i.e., an upper layer film and a lower layer film. The upper layer film is transparent and colorless and the side thereof facing the lower layer film is printed with characters and/or graphics.
PATENT DOCUMENT 1: Japanese Utility Model Registration Gazette No. 3094586

### DISCLOSURE OF THE INVENTION

### PROBLEM TO BE SOLVED BY THE INVENTION

According to this liquid-absorbent mat of prior art, ink used for printing is adapted to be kept out from contact with meat-product even when the mat directly bears meat-product thereon and consequently there is no anxiety that a sanitary problem might be caused due to ink used for printing. However, in spite of such consideration, this liquid-absorbent mat is not free from the technical restriction that the trouble-free ink for printing must be selected from the viewpoint of food hygiene.

In view of the problem as has been described above, it is a principal object of the present invention to provide a drip-absorbent sheet formed with characters and/or graphics without using ink for printing.

### MEASURE TO SOLVE THE PROBLEM

The object set forth above is achieved, according to the present invention, by an improvement in the drip-absorbent sheet comprising a liquid-pervious upper layer sheet having top and bottom surfaces and a liquid-absorbent lower layer sheet bonded to the bottom surface of the upper layer sheet so that drip oozing from meat-product placed on the top surface of the upper layer sheet can be absorbed by the lower layer sheet.

The improvement according to the present invention is **characterized in that**: the upper layer sheet is formed by thermoplastic film having thickness in a range of 0.01 to 0.1mm and consists of a non-display region occupying 70 to 99% of an entire area of the top surface and a display region occupying 30 to 1% of the entire area of the top surface; and the non-display region is defined by a section formed with a plurality of air- and liquid-pervious through-bores uniformly distributed and the display region is defined by an imperforated section surrounded by the non-display region having a sufficient area to be formed with a plurality of the air- and liquid-pervious through-bores so that the display region or display sub-regions thereof may be configured in the form of characters, graphics or patterns.

According to one preferred embodiment of the present invention, the display region is defined by the belt-shaped imperforated section.

According to another preferred embodiment of the present invention, each of the air- and liquid-pervious through-bores includes a tubular region extending downward from the upper layer sheet to the lower layer sheet.

According to still another preferred embodiment of the present invention, a first portion defined by the uppermost portion of the non-display region as viewed in a direction extending from the lower layer sheet toward the upper layer sheet and a second portion defined by the uppermost portion of the display region are in any one of positional relations as following:
a. the second portion is formed at the same level as a level of the first portion;
b. the second portion is formed at a level higher than a level of the first portion; and
c. the second portion is formed at a level lower than a level of the first portion.

According to yet another preferred embodiment of the present invention, the top surface of the display region is formed with asperities.

According to further another preferred embodiment of the present invention, the top surface of the display region is formed with grooves connected to the air- and liquid-pervious through-bores.

### EFFECT OF THE INVENTION

In the drip-absorbent sheet according to the present invention, the liquid-pervious upper layer sheet is formed by thermoplastic film which comprises the non-display region formed with a plurality of the air- and liquid-pervious through-bores and a display region surrounded by the non-display region and having an area sufficient to be formed with a plurality of the air- and liquid-pervious through-bores. The display region or the display sub-regions thereof may be configured in the form of characters, graphics or patterns. In this way, the drip-absorbent sheet according to the present invention allows characters or graphics to be formed without use of ink for printing.

### BRIEF DESCRIPTION OF THE DRAWINGS

[FIG. 1] Fig. 1 is a plan view of a drip-absorbent sheet.
[FIG. 2] Fig. 2 is a sectional view taken along a line II-II in Fig. 1.
[FIG. 3] Fig. 3 is a scale-enlarged view showing a part of Fig. 1.
[FIG. 4] Fig. 4 is a sectional view taken along a line IV-IV in Fig. 3.
[FIG. 5] Fig. 5 is a view similar to Fig. 4, showing one preferred embodiment of the present invention.
[FIG. 6] Fig. 6 is a view similar to Fig. 4, showing another preferred embodiment of the present invention.

### IDENTIFICATION OF REFERENCE NUMERALS USED IN THE DRAWINGS

- 1: drip-absorbent sheet
- 2: upper layer sheet
- 3: lower layer sheet
- 6: top surface
- 7: bottom surface
- 8: pores
- 8a: pore's peripheral edge
- 10: non-display region
- 11: display region
- 16: tubular region

### DESCRIPTION OF THE BEST MODE FOR WORKING OF THE INVENTION

Details of the drip-absorbent sheet according to the present invention will be more fully understood from the description given hereunder in reference to the accompanying drawings.

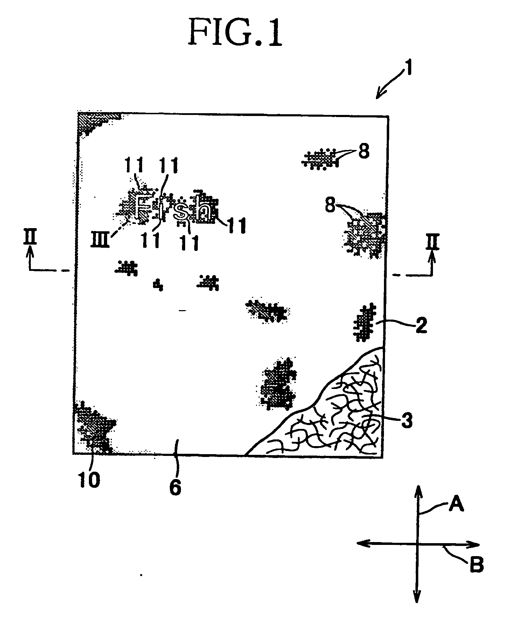

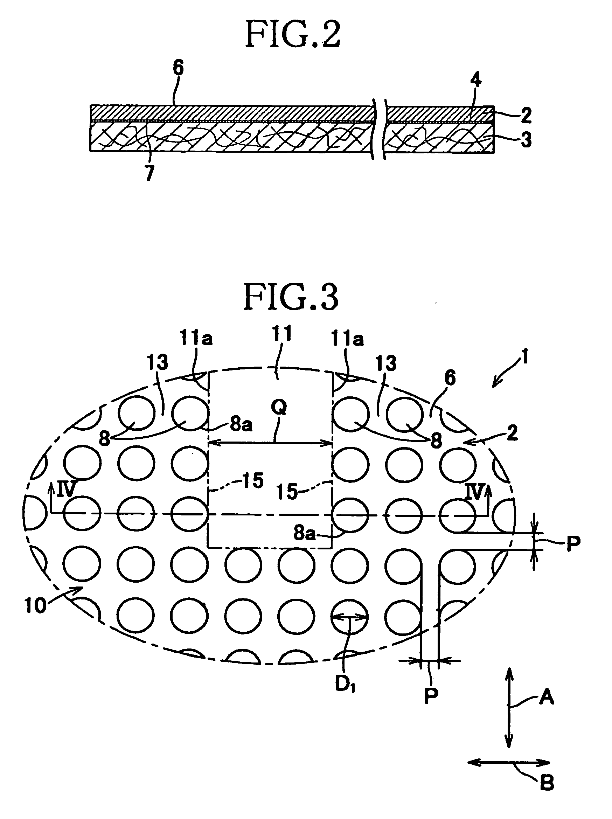

Fig. 1 is a plan view of a drip-absorbent sheet 1 and Fig. 2 is a sectional view taken along a line II-II in Fig. 1. The drip-absorbent sheet 1 comprises an upper layer sheet 2 preferably formed by thermoplastic film, more preferably formed by polyolefin-based thermoplastic film such as polyethylene thermoplastic film in any case having thickness in a range of 0.01 to 0.1mm, a lower layer sheet 3 formed by thermoplastic synthetic fiber non-woven fabric having a basis weight in a range of 20 to 200g/m² and an intermediate layer 4 formed by hot melt adhesive serving to bond these two sheets 2, 3 together.

The upper layer sheet 2 has a top surface 6, a bottom surface 7 and a plurality of air-permeable and liquid-pervious through-bores 8 extending through the top surface 6 and bottom surface 7. Meat-product such as fish food or beef is placed on the top surface 6 and drip (not shown) oozing from this meat-product moves downward toward the lower layer sheet 3. The upper layer sheet 2 has a non-display region 10 occupying 30 to 99% of a total area of the top surface 6 and having a plurality of through-bores 8 uniformly distributed thereon and display sub-regions 11 which may be referred to as imperforated sub-regions respectively surrounded by the non-display region 10 so that respective characters F, i, s and h may be defined. The display region 11 is formed so that these display sub-regions 11 may totally occupy 30 to 1% of the area of the top surface 6. Configuration of the display sub-regions 11 is not limited to the characters as in the illustrated embodiment and may be formed as various geometric graphics such as circle, rectangle and triangle or various patterns such as wavy continuous line pattern and continuous lattice pattern so far as the configuration of the display sub-regions 11 can be visually identified by a user of the drip-absorbent sheet 1. It should be noted here that outlines of the respective characters F, i, s and h are indicated by solid lines in order to clarify the presence thereof.

The lower layer sheet 3 serving to absorb drip and then to retain it may be formed by selectively using various types of non-woven fabric such as air-laid non-woven fabric, spun bonded non-woven fabric. The non-woven fabric may be chemically modified to become hydrophilic or may be added with water-absorbent fiber such as rayon fiber or pulp fiber to improve its water-absorption properties.

The intermediate layer 4 serves as means by which the upper layer sheet 2 and the lower layer sheet 3 are bonded together and, in the case of the illustrated embodiment, hot melt adhesive is used at a basis weight in a range of 1 to 5g/m². Hot melt adhesive is intermittently applied to the upper layer sheet 2 or the lower layer sheet 3 to prevent desirable air- and liquid-permeability from being noticeably affected. It should be noted here that the intermediate layer 4 is indicated by the layer continuously extending in the transverse direction in Fig. 2 in order to clarify the presence of the intermediate layer 4.

Fig. 3 is a scale-enlarged diagram showing a part of Fig. 1 surrounded by an imaginary line III of Fig. 1. In the upper layer sheet 2 of Fig. 1, the respective characters F, i, s and h are individual display sub-regions 11 and an assembly of these individual display sub-regions forms one word "Fish". Fig. 3 illustrates a part of one display sub-region 11 and non-display region 10 extending in the vicinity of this part in an enlarged scale. In the non-display region 10, the upper layer sheet 2 is uniformly formed on its top surface 6 with a plurality of circular through-bores 8 and, between each pair of the adjacent through-bores 8, a partition wall 13 is defined. Description "... is uniformly formed on its top surface 6 with a plurality of the through-bores" used herein means that a total area of the through-bores 8 distributed in a randomly selected 1cm x 1cm section of the top surface 6 is within a predetermined range whether a plurality of the through-bores are of one and same planar shape as in the illustrated embodiment or of two or more different planar shapes. While the air- and liquid-permeability of the upper layer sheet 2 is assured by the presence of the non-display region 10, the planar shape of the through-bore 8 making it possible is not particularly specified. The display region 11 is an imperforated region surrounded by the non-display region 10 and having an area sufficiently large to be formed with a plurality of the through-bores 8 if it is intended. In other words, it is easy for a user of this drip-absorbent sheet 1 to discriminate visually the display region 11 from the non-display region 11. Boundary between the display region 11 and the non-display region 10 is indicated by a chain-line 15 in Fig. 3. The chain line 15 extends so as to come in tangential contact with respective peripheral edges 8a of the adjacent through-bores 8, successively. In the case of the display region 11 is provided in the form of the characters, information such as use application, performance and/or trade name may be displayed, in the case of the display region 11 provided in the form of graphics, how to use the drip-absorbent sheet 1 may be schematically illustrated and in the case of the display region 11 in the form of patterns, the display region 11 may be used to add the drip-absorbent sheet 1 with a decorative effect.

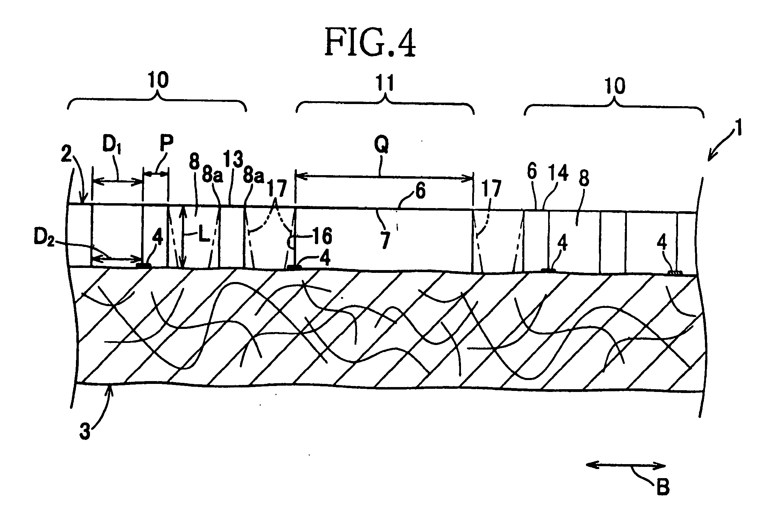

Referring to Fig. 3, the drip-absorbent sheet 1 has a longitudinal direction A and a transverse direction B extending orthogonally to each other and, in the non-display region 10, the through-bores 8 each have a bore diameter D₁ arranged at regular intervals P in the longitudinal direction A as well as in the transverse direction B. This interval P corresponds to the minimum value of a width dimension of the partition wall 13 defined between the peripheral edges 8a, 8a (See Fig. 4) of the adjacent through-bores 8. The illustrated belt-like part of the display region 11 extends in the longitudinal direction A and has a width Q in the transverse direction B defined between a pair of chain lines 15, 15 extending in parallel to each other.

Fig. 4 is a sectional view taken along a line IV-IV in Fig. 3. The upper layer sheet 2 and the lower layer sheet 3 are bonded to each other by hot melt adhesive intermittently applied as the intermediate layer 4. Each of the respective through-bores 8 of the upper layer sheet 2 has a tubular region 16 extending downward from the peripheral edge 8a of the through-bore 8 to the lower layer sheet 3 wherein the tubular region 16 has a length dimension L preferably in a range of 0.2 to 2mm. An upper end of the tubular region 16 is defined by the peripheral edge 8a of the through-bore 8 and has the bore diameter D₁ and the lower end of the tubular region 16 has a bore diameter D₂. The bore diameter D₂ is set to be same as the bore diameter D₁ or smaller than the bore diameter D₁. The tubular region 16 of which the bore diameter D₂ is smaller than the bore diameter D₁ has a shape indicated by an imaginary line 17. With such tubular region 16, an amount of drip having flown into the through-bore 8 rapidly moves to the lower layer sheet 3 under the effect of capillary effect. In the preferred upper layer sheet 2, the bore diameters D₁, D₂ are in a range of 0.1 to 1 mm The partition wall 13 defined between each pair of the adjacent through-bores 8, 8 has a top portion 14 as viewed in a direction from the bottom surface 7 toward the top surface 6 of the upper layer sheet 2 and this top portion 14 is flatly formed in the illustrated embodiment. Thickness P of the partition wall 13 is preferably in a range of 0.01 to 1mm to improve the air- and liquid-permeability in non-display region 10.

The display region 11 is the air- and liquid-impermeable section of the upper layer sheet 2. When meat-product, e.g., beef is placed on the upper layer sheet 2, such display region 11 makes it difficult to keep beef in contact with aerial oxygen and thereby to induce red color development of beef. To overcome this problem, the inventor prepared the trial drip-absorbent sheets respectively having different values of Q indicated in Fig. 3 as width dimension Q of the display region 11 comprising characters. Thigh-meat of beef was placed on the sheets 1 for test and, after kept in refrigerator for 12 hours, color development appearing in the portion of thigh-meat left in contact with the display region was observed. In the light of the observation result, the inventor found that, on the sheet 1 provided with the display region 11 having the width dimension Q of 3mm or less, the portion of thigh-meat left in contact with the display region 11 develops red color in a substantially same manner as in the portion of thigh-meat left in contact with the non-display region 10. On the sheet 1 provided with the display region 11 having the width dimension Q of 3.5mm or larger, the portion of thigh-meat left in contact with the display region 11 develops brown color which can be visually discriminated from the portion left in contact with the non-display region 10. In this way, it was verified that the width dimension Q of 3.5mm or larger is unfavorable. In this observation, the inventor tried to vary the dimension of the display region 11 in the longitudinal direction A within a range of 30 to 80mm but could not determine if this dimension influences on color development or not. Based on such observation result, the width dimension Q of the display region 11 of 3mm or less is considered to be preferable. It should be noted here that the display region 11 can properly function as the display region only when this region 11 can be visually discriminated from the non-display region 10 and, to meet such requirement, it is essential for individual display sub-regions 11 to have a sufficient area to be formed with a plurality of the through-bores 8. From this viewpoint, the upper limit of the width dimension Q is 3mm in case of the embodiment shown by Fig. 3. The lower limit of the width dimension Q is preferably 0. 3mm from a practical viewpoint for the drip-absorbent sheet 1.

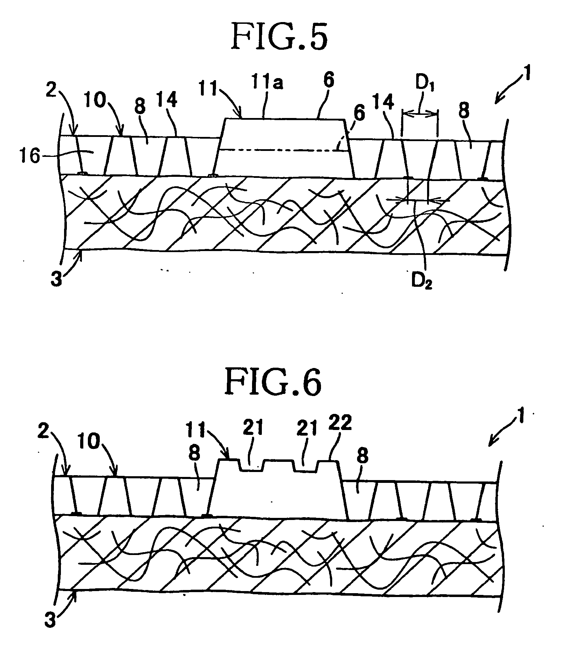

Fig. 5 is a view similar to Fig. 4, showing one preferred embodiment of the present invention. In the drip-absorbent sheet 1 shown by Fig. 5, a top 11a, i.e., the uppermost portion of the display region 11 lies above the top surface 14 of the non-display region 10 or lies below the latter as indicated by an imaginary line. In each case, a step is formed between the non-display region 10 and the display region 11. Compared to the drip-absorbent sheet 1 of Fig. 4 having not such step, in the case of the drip-absorbent sheet 1 having the step, the presence of the step facilitates a gap to be formed between the meat-product placed on the sheet 1 and meat-product in the vicinity of the step. This gap allows meat-product to be put in contact with aerial oxygen. It should be appreciated here that Fig. 5 illustrates a case in which the bore diameter D₂ is smaller than the bore diameter D₁ of the tubular region 16.

Fig. 6 also is a view similar to Fig. 5, showing another preferred embodiment of the present invention. In the drip-absorbent sheet 1 shown by Fig. 6, the upper layer sheet 2 of the display region 11 is formed with depressed portions 21 and protruding portions 22. The depressed portions 21 may be replaced by grooves extending to peripheral edge of the display region 11. In such drip-absorbent sheet 1, when meat-product is placed on the depressed portions 21 or the grooves defined by the respective depressed portions 21, chances of contact with aerial oxygen can be effectively increased. In addition of such effect, an amount of drip oozing from the liquid-impervious display region 11 flows along the groove-like depressed portions 21 toward the through-bores 8. Consequentially, it is possible to prevent any amount of drip from staying on the drip-absorbent sheet 1 and deteriorating appearance of meat-product and, in addition, it is also possible to restrict growth of bacteria.

According to the present invention, the upper layer sheet 2 having the through-bores 8 may be obtained by heating thermoplastic film and making it fit in a mold of desired configuration under the effect of vacuum. In this step, film may be ruptured under the effect of vacuum to form the through-bores 8. Instead of bonding the upper layer sheet 2 and the lower layer sheet 3 to each other by means of hot melt adhesive, heated embossing rolls may be used to bond these two layer sheets 2, 3 together.

## Claims

1. Drip-absorbent sheet (1) comprising a liquid-pervious upper layer sheet (2) having top and bottom surfaces (6, 7) and a liquid-absorbent lower layer sheet (2) bonded to said bottom surface (7) of said upper layer sheet (2) so that drip oozing from meat-product placed on said top surface of said upper layer sheet (2) can be absorbed by said lower layer sheet (3), said drip-absorbent sheet (1) being **characterized in that**:
said upper layer sheet (2) is formed by thermoplastic film having thickness in a range of 0.01 to 0.1mm and consists of a non-display region (10) occupying 70 to 99% of an entire area of said top surface (6) and a display region (11) occupying 30 to 1% of the entire area of said top surface (6); and
said non-display region (10) is defined by a section formed with a plurality of air- and liquid-pervious through-bores uniformly distributed and said display region (11) is defined by an imperforated section surrounded by said non-display region (10) having a sufficient area to be formed with a plurality of said air- and liquid-pervious through-bores (8) so that said display region or display sub-regions thereof may be configured in the form of characters, graphics or patterns.

2. The drip-absorbent sheet defined by Claim 1 wherein said display region (11) is defined by belt-shaped said imperforated section.

3. The drip-absorbent sheet defined by Claim 1 or 2 wherein each of said air- and liquid-pervious through-bores (8) includes a tubular region (16) extending downward from said upper layer sheet (2) to said lower layer sheet (3).

4. The drip-absorbent sheet defined by any one of Claims 1 through 3 wherein a first portion defined by the uppermost portion of said non-display region (10) as viewed in a direction extending from said lower layer sheet (3) toward said upper layer sheet (2) and a second portion defined by the uppermost portion of said display region (11) are in any one of positional relations as following:
a. said second portion is formed at the same level as a level of said first portion;
b. said second portion is formed at a level higher than a level of said first portion; and
c. said second portion is formed at a level lower than a level of said first portion.

5. The drip-absorbent sheet defined by any one of Claims 1 through 4 wherein said top surface of said display region (11) is formed with asperities.

6. The drip-absorbent sheet defined by any one of Claims 1 through 5 wherein said top surface of said display region (11) is formed with grooves connected to said air- and liquid-pervious through-bores (8).

## Patentansprüche

1. Tropfenabsorbierendes Flächengebilde (1), umfassend ein flüssigkeitsdurchlässiges Oberschichtflächengebilde (2), das eine obere und eine untere Oberfläche (6, 7) aufweist, und ein flüssigkeitsabsorbierendes Unterschichtflächengebilde (3), das mit der unteren Oberfläche (7) des Oberschichtflächengebildes (2) so verbunden ist, dass von einem auf die obere Oberfläche des Oberschichtflächengebildes (2) gelegten Fleischprodukt austrendende Tropfflüssigkeit von dem Unterschichtflächengebilde (3) absorbiert werden kann, wobei das tropfenabsorbierende Flächengebilde (1) **dadurch gekennzeichnet ist, dass**:
das Oberschichtflächengebilde (2) aus einem thermoplastischen Film gebildet ist, der eine Dicke im Bereich von 0,01 bis 0,1 mm hat und aus einem Nicht-Anzeige-Bereich (10), der 70 bis 99% der Gesamtfläche der oberen Oberfläche (6) einnimmt, und einem Anzeige-Bereich (11), der 30 bis 1 % der Gesamtfläche der oberen Oberfläche (6) einnimmt, besteht; und
der Nicht-Anzeige-Bereich (10) durch einen Abschnitt definiert ist, der mit einer Vielzahl luft- und flüssigkeitsdurchlässiger Durchlochungen (8) ausgebildet ist, die gleichmäßig verteilt sind, und der Anzeige-Bereich (11) durch einen undurchlochten Abschnitt definiert ist, der von dem Nicht-Anzeige-Bereich (10) umgeben ist, der genügend Fläche hat, damit er mit einer Vielzahl der luft- und flüssigkeitsdurchlässigen Durchlochungen (8) ausgebildet sein kann, so dass der Anzeige-Bereich oder Anzeige-Unterbereiche davon in der Form von Zeichen, Grafiken oder Mustern konfiguriert sein kann bzw. können.

2. Tropfenabsorbierendes Flächengebilde gemäß Anspruch 1, wobei der Anzeige-Bereich (11) dadurch definiert ist, dass der undurchlochte Abschnitt streifenförmig ist.

3. Tropfenabsorbierendes Flächengebilde gemäß Anspruch 1 oder 2, wobei jede der luft- und flüssigkeitsdurchlässigen Durchlochungen (8) einen rohrförmigen Bereich (16) aufweist, der sich von dem Oberschichtflächengebilde (2) zu dem Unterschichtflächengebilde (3) nach unten erstreckt.

4. Tropfenabsorbierendes Flächengebilde gemäß einem der Ansprüche 1 bis 3, wobei ein erster Teil, der in einer Richtung gesehen, die sich von dem Unterschichtflächengebilde (3) zu dem Oberschichtflächengebilde (2) erstreckt, von dem obersten Teil des Nicht-Anzeige-Bereichs (10) definiert ist, und ein zweiter Teil, der von dem obersten Teil des Anzeige-Bereichs (11) definiert ist, in einer der folgenden Positionsbeziehungen zueinander sind:
a) der zweite Teil ist auf dem gleichen Niveau wie der erste Teil ausgebildet;
b) der zweite Teil ist auf einem Niveau ausgebildet, das höher als das Niveau des ersten Teils ist; und
c) der zweite Teil ist auf einem Niveau ausgebildet, das niedriger als das Niveau des ersten Teils ist.

5. Tropfenabsorbierendes Flächengebilde gemäß einem der Ansprüche 1 bis 4, wobei die obere Oberfläche des Anzeige-Bereichs (11) mit Unebenheiten ausgebildet ist.

6. Tropfenabsorbierendes Flächengebilde gemäß einem der Ansprüche 1 bis 5, wobei die obere Oberfläche des Anzeige-Bereichs (11) mit Rillen ausgebildet ist, die mit den luft- und flüssigkeitsdurchlässigen Durchlochungen (8) verbunden sind.

## Revendications

1. Feuille d'absorption de gouttes (1) comprenant une couche supérieure perméable aux liquides (2) possédant des surfaces supérieure et inférieure (6, 7) et une couche inférieure d'absorption de liquide (3) liée à ladite surface inférieure (7) de ladite couche supérieure (2) de sorte que des gouttes suintant d'un produit à base de viande placé sur ladite surface supérieure de ladite couche supérieure (2) puissent être absorbées par ladite couche inférieure (3), ladite feuille d'absorption de gouttes (1) étant **caractérisée en ce que** :
ladite couche supérieure (2) est formée par un film thermoplastique ayant une épaisseur comprise dans la plage allant de 0,01 à 0,1 mm et se compose d'une région de non-affichage (10) occupant 70 à 99 % de toute la superficie de ladite surface supérieure (6) et une région d'affichage (11) occupant de 30 à 1 % de toute la superficie de ladite surface supérieure (6) ; et
ladite région de non-affichage (10) est définie par une section formée d'une pluralité de trous traversants perméables à l'air et aux liquides (8) distribués de manière uniforme et ladite région d'affichage (11) est définie par une section non perforée entourée par ladite région de non-affichage (10) ayant une superficie suffisante pour être formée avec une pluralité desdits trous traversants perméables à l'air et aux liquides (8) de sorte que ladite région d'affichage ou les sous-régions d'affichage de celle-ci puisse(ent) être configurée(s) sous la forme de caractères, graphiques, ou motifs.

2. Feuille d'absorption de gouttes selon la revendication 1, dans laquelle ladite région d'affichage (11) est définie par la forme ovale de ladite section non perforée.

3. Feuille d'absorption de gouttes selon la revendications 1 ou 2, dans laquelle chacun desdits trous traversants perméables à l'air et aux
liquides (8) comprend une région tubulaire (16) se prolongeant vers le bas de ladite couche supérieure (2) vers ladite couche inférieure (3).

4. Feuille d'absorption de gouttes selon l'une quelconque des revendications 1 à 3, dans laquelle une première partie définie par la partie la plus au-dessus de ladite région de non affichage (10) comme observée dans un sens se prolongeant de ladite couche inférieure (3) vers ladite couche supérieure (2) et une deuxième partie définie par la partie la plus au-dessus de ladite région d'affichage (11) sont dans l'une quelconque des relations de positionnement suivantes :
a. ladite deuxième partie est formée au même niveau qu'un niveau de ladite première partie ;
b. ladite deuxième partie est formée à niveau plus élevé qu'un niveau de ladite première partie ;
c. ladite deuxième partie est formée à niveau moins élevé qu'un niveau de ladite première partie.

5. Feuille d'absorption de gouttes selon l'une quelconque des revendications 1 à 4, dans laquelle ladite surface supérieure de ladite région d'affichage (11) est formée avec des aspérités.

6. Feuille d'absorption de gouttes selon l'une quelconque des revendications 1 à 5, dans laquelle ladite surface supérieure de ladite région d'affichage (11) est formée avec des rainures reliées auxdits trous traversants perméables à l'air et aux liquides (8).
